# EUROPEAN PATENT SPECIFICATION

(11) **EP 0 818 266 B1**
(45) Date of publication and mention of the grant of the patent: **10.05.2000**
(21) Application number: 97304972.9
(22) Date of filing: 08.07.1997
(51) Int. Cl.: B23K 1/00

(54) **Method for manufacturing a multi-tube heat exchanger**
Verfahren zum Herstellen eines Warmaustauscher mit mehreren Rohren
Méthode de fabrication d'un échangeur de chaleur multitube

(30) Priority: 11.07.1996 JP 20132896
(43) Date of publication of application: 14.01.1998
(73) Proprietor: Sanden Corporation, Isesaki-shi, Gunma 372-8502 (JP)
(72) Inventor: Morita, Tomonari, Isesaki-shi, Gunma 372 (JP)
(74) Representative: Jackson, Peter Arthur

(56) References cited:
- GB-A- 2 017 761
- US-A- 4 496 818
- US-A- 4 989 775

## Description

The present invention relates to a method for manufacturing a multi-tube heat exchanger, and more particularly to an improved manufacturing method suitable for brazing a pair of tanks and a plurality of heat transfer tubes.

A conventional multi-tube heat exchanger generally has a pair of tanks separated from each other and a plurality of heat transfer tubes fluidly interconnected between the tanks. Tube insertion holes are provided on walls of the respective tanks. End portions of the respective tubes are inserted into respective corresponding tube insertion holes and brazed thereto.

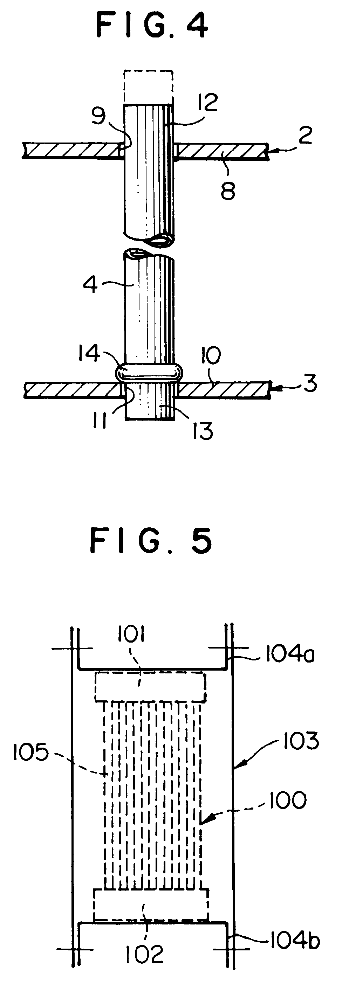

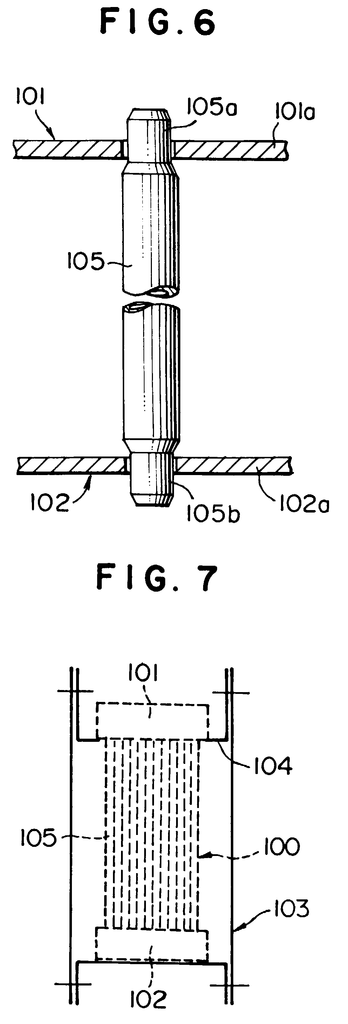

In the manufacture of such a multi-tube heat exchanger, for example, as shown in Fig. 5, a pair of tanks 101 and 102 of multi-tube heat exchanger 100 are fixed at a predetermined positional relationship by tank supporting members 104a and 104b of a jig 103. In this state, a plurality of heat transfer tubes 105 are brazed to and fluidly interconnect tanks 101 and 102 at a standing condition. Each heat transfer tube 105 engages tank wall 101a of one tank 101 at one end 105a and tank wall 102a of the other tank 102 at the other end 105b, for example, as shown in Fig. 6.

In such a manufacturing method, however, when heated for brazing, heat transfer tubes 105 are fixed from both sides by tank supporting members 104a and 104b of jig 103. The elongation of heat transfer tubes 105 is restricted by the jig 103. The coefficient of thermal expansion of the jig 103 is generally lower than that of the parts forming the heat exchanger, particularly, that of the heat transfer tubes 105. As a result, heat transfer tube 105 may bow or deform.

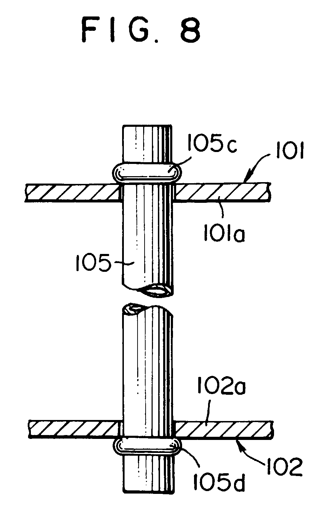

In order to solve such problems, the applicant previously proposed (in-house prior art) the arrangement shown in Fig. 7. In Fig. 7, tank 101 of heat exchanger 100 is suspended by tank supporting member 104 of jig 103. The multi-tube heat exchanger is structured, for example, as shown in Fig. 8. Engaging portion 105c at one end of each heat transfer tube 105 engages tank wall 101a of tank 101 and engaging portion 105d at the other end engages tank wall 102a of tank 102. The weight of tank 102 is applied to heat transfer tubes 105 by the engagement of respective engaging portions 105c and 105d with respective tank walls 101a and 102a, during the above-described suspension. Tension is applied to heat transfer tubes 105 by the weight of tank 102. In such a condition, brazing and cooling are carried out, thereby preventing bowing or bending of the heat transfer tubes 105.

In the above-described proposal, however, since assembled heat exchanger 100 must be suspended prior to brazing, it is necessary to provide engaging portions 105c and 105d on the ends of heat transfer tubes 105. Such engaging portions 105c and 105d make the heat exchanger more complicated and expensive. Therefore, a method for manufacturing a multi-tube heat exchanger capable of preventing bowing or bending of heat transfer tubes more effectively is desired.

These and other disadvantages of the prior art are sought to be overcome by the invention of the preferred embodiments.

It would be desirable to provide a method for manufacturing a multi-tube heat exchanger which can help ensure proper tube positioning and spacing and prevents bowing or deformation of the heat transfer tubes during the brazing process.

A method for manufacturing a multi-tube heat exchanger according to the present invention is herein provided. The multi-tube heat exchanger includes a pair of tanks separated from each other and a plurality of heat transfer tubes fluidly interconnecting the pair of tanks. The pair of tanks are brazed to the heat transfer tubes. The manufacturing method comprises the steps of fixing the pair of tanks before brazing with a jig formed with a first material having a coefficient of thermal expansion (= a coefficient of thermal contraction) lower than that of the heat transfer tubes. Next, tension is applied to the heat transfer tubes in an axial direction according to the difference of coefficients of thermal expansion of the heat transfer tubes and the jig. The tension is applied after the pair of tanks and the heat transfer tubes have cooled following the brazing process.

In the manufacturing method, it is preferred that respective ends of each heat transfer tube engage a respective wall of each tank. The wall of one tank can move relative to the tubes in an axial direction during the brazing process.

The jig has a first portion for fixing the first tank, a second portion for fixing the second tank and a supporting portion extending between the first and second portions in a direction along the axial direction of the heat transfer tubes. At least the supporting portion may be formed from the first material, which has a lower coefficient of thermal expansion.

When tanks and heat transfer tubes are heated for brazing, the jig fixing the pair of tanks thermally expands so that the tanks further separate from each other. At the same time, the heat transfer tubes thermally expand in the same direction, but more so. At least one end portion of each heat transfer tube is allowed to elongate into a corresponding tank by the thermal expansion. In the cooling process after brazing, both end portions of the heat transfer tubes are fixed to the walls of the respective corresponding tanks by coagulation of the brazing material. In such a condition, the heat transfer tubes and the jig fixing the pair of tanks thermally contract in the axial direction of the heat transfer tubes by the cooling. Since the coefficient of thermal contraction of the jig is lower than the coefficient of thermal contraction of the heat transfer tubes, the heat transfer tubes come under tension during the cooling process. Namely, an appropriate tension is applied to the heat transfer tubes in the axial direction utilizing the cooling after brazing. As a result, bowing, bending or any other otherwise undesired deformation of the heat transfer tubes can be prevented.

Further objects, features, and advantages of the present invention will be understood from the following detailed description of the preferred embodiments of the present invention with reference to the appropriate figures.

Embodiments of the invention will now be described with reference to appropriate figures, which are given by way of example only, and are not intended to limit the present invention.

Fig. 1 is a perspective view of a multi-tube heat exchanger manufactured by a method according to a first embodiment of the present invention.

Fig. 2 is an enlarged, partial, vertical sectional view of the multi-tube heat exchanger depicted in Fig. 1.

Fig. 3 is a schematic vertical sectional view of a jig employed in the first embodiment of the present invention.

Fig. 4 is a partial, vertical sectional view of a multi-tube heat exchanger manufactured by a method according to a second embodiment of the present invention.

Fig. 5 is a schematic vertical sectional view of a conventional jig.

Fig. 6 is an enlarged, partial, vertical sectional view of the multi-tube heat exchanger depicted in Fig. 5.

Fig. 7 is a schematic vertical sectional view of a jig employed in a method previously proposed by the applicant (in-house prior art).

Fig. 8 is an enlarged, partial, vertical sectional view of the multi-tube heat exchanger depicted in Fig. 7.

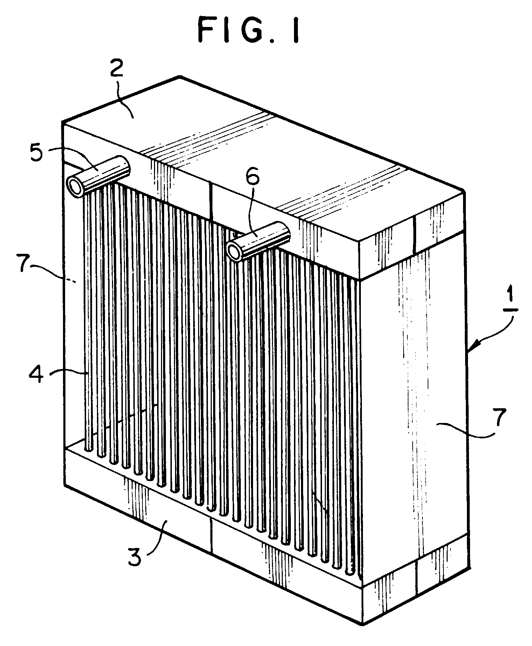

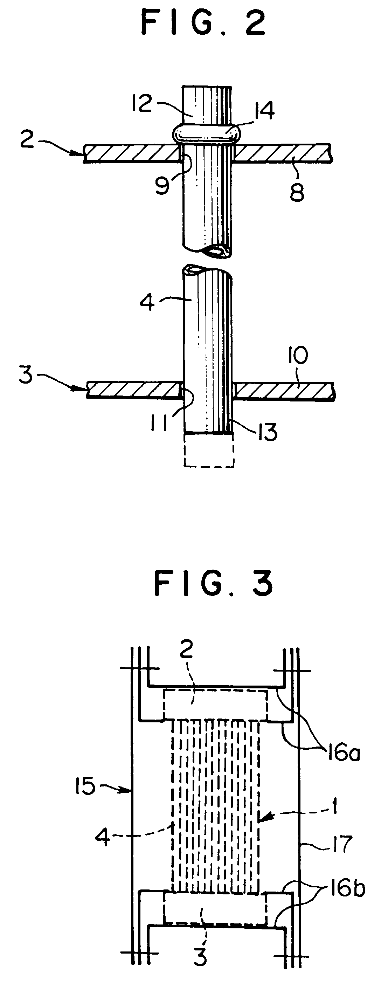

Referring to Figs. 1 and 2, a multi-tube heat exchanger 1 is provided according to a first embodiment. Heat exchanger 1 includes a pair of tanks 2 and 3. A plurality of heat transfer tubes 4 (for example, refrigerant tubes having a circular cross section) are fluidly interconnected between tanks 2 and 3. Inlet pipe 5 and outlet pipe 6 are connected to tank 2. Side plate 7 is provided between each side of tank 2 and each side of tank 3. Heat exchange medium, for example, refrigerant, is introduced into tank 2 through inlet pipe 5, and after circulation through heat exchanger 1, the heat exchange medium flows out of tank 2 through outlet pipe 6.

As depicted in Fig. 2, each heat transfer tube 4 is inserted into a tube insertion hole 9 defined on tank wall 8 of tank 2 at a first end portion 12, and into a tube insertion hole 11 defined on tank wall 10 of tank 3 at a second end portion 13. At one end portion 12, each heat transfer tube 4 has a flange portion 14 provided as an engaging portion capable of engaging a corresponding tank wall 8 of tank 2. Flange portion 14 is formed as a ring-like portion protruding from a periphery of heat transfer tube 4 in a radially outer direction of the tube 4. This flange portion 14 engages with the upper surface of tank wall 8 (the inner surface of the tank wall 8 of tank 2) after heat transfer tube 4 is inserted into tube insertion hole 9 from the upper side of the figure. The other end portion 13 of heat transfer tube 4 is formed as a straight tubular form. The other end portion 13 of heat transfer tube 4 is inserted into tube insertion hole 11 from the upper side of the figure. This portion of heat transfer tube 4 is free to move in the axial direction relative to tank wall 11.

A jig for brazing is formed, for example, as depicted in Fig. 3. In Fig. 3, jig 15 includes a first portion 16a (an upper portion) for fixing first tank 2 (an upper tank), a second portion 16b (a lower portion) for fixing second tank 3 (a lower tank), and a supporting portion 17 extending between first and second tanks 2 and 3 along the axial direction of heat transfer tubes 4. Jig 15, particularly, at least supporting portion 17 of jig 15 has a coefficient of thermal contraction lower than the coefficient of thermal contraction of heat transfer tubes 4.

In this embodiment, multi-tube heat exchanger 1 is assembled and manufactured as follows.

First, as depicted in Fig. 2, heat transfer tubes 4 are inserted into tube insertion holes 9 and 11 of tanks 2 and 3 at both end portions 12 and 13, respectively. Flange portion 14 of each heat transfer tube 4 may be formed either before the above-described tube insertion or after the tube insertion.

In this assembly condition, flange 14 of each heat transfer tube 4 engages the inner surface of tank wall 8. The other end 13 of each heat transfer tube 4 is free to move axially in tube insertion hole 11 relative to tank wall 10. This direction is the same direction in which each heat transfer tube 4 elongates during brazing.

Heat exchanger 1 is then brazed in a furnace. Both tanks 2 and 3 are fixed by portions 16a and 16b, respectively. During brazing in the furnace, heat transfer tubes 4 elongate in the axial direction. However, because second end portion 13 is free to move in the axial direction relative to tank wall 10 of tank 3, the elongation due to the thermal expansion appears at second end portion 13, as shown by the dotted line in Fig. 2. Thus, the thermal expansion of each heat transfer tube 4 is accounted for at second end portion 13. Therefore, bowing, bending or any other otherwise undesirable deformation of heat transfer tubes 4 can be appropriately prevented.

During brazing, jig 15 also elongates in the same direction as that of heat transfer tubes 4. However, the amount of the elongation of jig 15 is smaller than that of heat transfer tubes 4.

While cooling after brazing, heat transfer tubes 4 contract in the axial direction. However, because both end portions 12 and 13 of heat transfer tubes 4 are fixed to tanks 2 and 3, respectively, by the coagulated brazing material, the thermal contraction of heat transfer tubes 4 is restricted. Although jig 15 also contracts in the same direction, the amount of the thermal contraction of jig 15 is smaller than that of heat transfer tubes 4. However, in practice, jig 15 and heat transfer tubes 4 are mechanically connected via tanks 2 and 3 and the coagulated brazing material. As a result, tension is applied to heat transfer tubes 4 in the axial direction as a result of the difference between the coefficients of thermal contraction of jig 15 and heat transfer tubes 4. Therefore, the brazed heat exchanger 1 is cooled in a condition where tension is applied to heat transfer tubes 4, and bowing, bending or deformation of heat transfer tubes 4 may be avoided.

Fig. 4 depicts a portion of a multi-tube heat exchanger manufactured by a method according to a second embodiment of the present invention. In this embodiment, one end 12 of each heat transfer tube 4 is formed as a straight tube, and a flange portion 14 is formed on the other end 13. Flange 14 engages the outer surface of tank wall 10. End 12 is free to move through tube insertion hole 9 in the axial direction of tube 4 relative to tank wall 8 of tank 2.

In this embodiment, bowing, bending or deformation of heat transfer tubes 4 may be prevented during heating by the combination of flange 14 and relative movable end portion 12. Moreover, bowing, bending or deformation of heat transfer tubes 4 may be prevented during cooling following brazing as a result of jig 15 having a coefficient of thermal contraction lower than that of heat transfer tubes 4, as described in the first embodiment.

In the above-described first and second embodiments, materials forming heat transfer tubes 4 and jig 15 are not particularly restricted, as long as the above-described relationship in coefficients of thermal contraction is satisfied and tension is applied to heat transfer tubes 4 during the cooling process following brazing.

Although the preferred embodiments are described in connection with multi-tube heat exchangers arranged with tanks 2 and 3 oriented in a vertical direction, the arrangement of the tanks 2, 3 is not critical to the invention, but rather the invention is intended to include tanks 2, 3 arranged in horizontal or other directions.

## Claims

1. A method for manufacturing a multi-tube heat exchanger having a pair of tanks separated from each other and a plurality of heat transfer tubes fluidly interconnected between said pair of tanks by brazing said pair of tanks and said heat transfer tubes, said method comprising the steps of:
fixing said pair of tanks in a jig prior to brazing, said jig being formed with a first material having a coefficient of thermal contraction lower than a coefficient of thermal contraction of a second material forming said heat transfer tubes; and
causing tension to said heat transfer tubes when cooled after brazing, the tension being applied in an axial direction thereof as a result of the difference of coefficients of thermal contraction of said heat transfer tubes and said jig.

2. The method for manufacturing a multi-tube heat exchanger of claim 1 further comprising the step of engaging (a) a first end of each of said heat transfer tubes with a wall of a first tank of said pair of tanks and (b) a second end of each of said heat transfer tubes with a wall of a second tank of said pair of tanks, said second end of said tubes being movable relative to the wall of the second tank during the brazing process.

3. The method for manufacturing a multi-tube heat exchanger of claim 1 or 2, wherein said jig has a first portion for fixing said first tank, a second portion for fixing said second tank and a supporting portion extending between said first and second portions in a direction along the axial direction of said heat transfer tubes, and at least said supporting portion is formed from said first material.

## Patentansprüche

1. Verfahren zum Herstellen eines Mehrrohrwärmetauschers mit einem Paar von voneinander getrennten Tanken und einer Mehrzahl von Wärmeübertragungsrohren, die fluidmäßig zwischen dem Paar von Tanken durch Verlöten des Paares von Tanken und der Wärmeübertragungsrohre verbunden sind, wobei das Verfahren die Schritte aufweist:
Befestigen des Paares von Tanken in einer Spannvorrichtung vor dem Verlöten, wobei die Spannvorrichtung mit einem ersten Material mit einem Wärmekontraktionskoeffizienten niedriger als ein Wärmekontraktionskoeffizient eines die Wärmeübertragungsrohre bildenden zweiten Materiales gebildet ist; und
Verursachen einer Spannung an den Wärmeübertragungsrohren, wenn sie nach dem Löten gekühlt werden, wobei die Spannung in einer axialen Richtung davon als Resultat der Differenz der Wärmekontraktionskoeffizienten der Wärmeübertragungsrohre und der Spannvorrichtung angelegt wird.

2. Verfahren zum Herstellen eines Mehrrohrwärmetauschers nach Anspruch 2, weiter mit dem Schritt des Angreifens (a) eines ersten Endes eines jeden der Wärmeübertragungsrohre an eine Wand eines ersten Tankes des Paares von Tanken und (b) eines zweiten Endes eines jeden der Wärmeübertragungsrohre an eine Wand eines zweiten Tankes des Paares von Tanken, wobei das zweite Ende der Rohre relativ zu der Wand des zweiten Tankes während des Lötvorganges bewegbar ist.

3. Verfahren zum Herstellen eines Mehrrohrwärmetauschers nach Anspruch 1 oder 2, bei dem die Spannvorrichtung einen ersten Abschnitt zum Befestigen des ersten Tankes, einen zweiten Abschnitt zum Befestigen des zweiten Tankes und einen Tragabschnitt, der sich zwischen dem ersten und dem zweiten Abschnitt in einer Richtung entlang der axialen Richtung der Wärmeübertragungsrohre erstreckt, aufweist und mindestens der Trageabschnitt aus dem ersten Material gebildet ist.

## Revendications

1. Procédé de fabrication d'un échangeur de chaleur multitube comportant une paire de réservoirs séparés l'un de l'autre, et un certain nombre de tubes de transfert de chaleur interconnectés pour former une liaison de fluide entre la paire de réservoirs, par brasage de cette paire de réservoirs et des tubes de transfert de chaleur,
ce procédé comprenant,
les étapes consistant à :
• fixer la paire de réservoirs dans un gabarit avant le brasage, ce gabarit étant réalisé dans un premier matériau ayant un coefficient de contraction thermique inférieur à celui d'un second matériau formant les tubes de transfert de chaleur ; et
• produire une tension sur les tubes de transfert de chaleur lorsqu'ils refroidissent après le brasage, cette tension étant appliquée dans une direction axiale des tubes par suite de la différence des coefficients de contraction thermique entre les tubes de transfert de chaleur et le gabarit.

2. Procédé de fabrication d'un échangeur de chaleur multitube selon la revendication 1,
comprenant en outre
l'étape d'engagement (a) d'une première extrémité de chacun des tubes de transfert de chaleur dans une paroi d'un premier réservoir de la paire de réservoirs, et (b) d'une seconde extrémité de chacun des tubes de transfert de chaleur dans une paroi du second réservoir de la paire de réservoirs, cette seconde extrémité des tubes étant mobile par rapport la paroi du second réservoir pendant le processus de brasage.

3. Procédé de fabrication d'un échangeur de chaleur multitube selon la revendication 1 ou 2
dans lequel
le gabarit comporte une première partie pour fixer le premier réservoir, une seconde partie pour fixer le second réservoir, et une partie de support s'étendant entre la première partie et la seconde partie suivant la direction axiale des tubes de transfert de chaleur, et la partie de support au moins étant réalisée dans le premier matériau.
